# EUROPEAN PATENT SPECIFICATION

(11) **EP 3 720 133 B1**
(45) Date of publication and mention of the grant of the patent: **19.07.2023**
(21) Application number: 19167474.6
(22) Date of filing: 05.04.2019
(51) Int. Cl.: H04N 21/234, H04N 21/24, H04N 19/152

(54) **APPARATUS AND METHOD FOR REAL-TIME STREAMING OF VIDEO**
VORRICHTUNG UND VERFAHREN ZUM ECHTZEIT-STREAMING VON VIDEOS
APPAREIL ET PROCÉDÉ DE DIFFUSION EN CONTINU DE VIDÉOS EN TEMPS RÉEL

(43) Date of publication of application: 07.10.2020
(73) Proprietor: Nokia Solutions and Networks Oy, 02610 Espoo (FI)
(72) Inventor: DOBBELAERE, Philippe, 2520 Broechem (BE)
(74) Representative: IP HILLS NV

(56) References cited:
- US-A1- 2007 097 257
- US-A1- 2007 280 349

## Description

### Technical Field

Various example embodiments relate, amongst others, to an apparatus and method for real-time streaming of a video over a network.

### Background

When providing real-time video, managing latency is an important but challenging task. Enabling low latency becomes even more important in applications where control loops are involved, i.e. where recorded images are used to actuate the physical world. Examples of such applications are the use of real-time video to control drones, or to control medical equipment during surgery. For such applications, ultra-low latency video, with a targeted latency in the order of magnitude of a few frames, is indispensable. Even more, in such cases the continuity of the images and the viewing experience are often subordinate to providing images with almost no latency.

Concerning video encoding, advanced MPEG video compression standards like H.264 or H.265 make use of inter-image encoding. As playout is typically synchronized on the I-frames, latency is uniformly distributed between 0 and the I-frame distance, thereby making this approach unsuitable for ultra-low latency applications. Such encoding techniques are for example used in US2007/0280349 and US2007/0097257, the latter presenting a solution for real-time Video Telephony. In another video encoding approach, every frame is encoded individually. This is applied in MJPEG (Motion JPEG), where each frame of a digital video sequence is compressed separately as a JPEG image. MJPEG can be used wherever HTTP is supported, so that no client-side development is required, and developments on the server side can be done independently from updates at the video player side. Compared to the MPEG-approach, MJPEG requires more bandwidth due to its low encoding quality. On the other hand, latency at the client side is only determined by the individual frames themselves. The latter is an important advantage in view of ultra-low latency applications.

### Summary

Despite the fact that an MJPEG-approach is attractive in view of ultra-low latency applications, today no satisfying solution exists for real-time video using MJPEG. Indeed, as the compression efficiency is relatively low with MJPEG, situations occur where the bandwidth required by the MJPEG server is higher than the actual available bandwidth of the network. E.g. framerates of about 30 fps and with decent encoding quality require a lot more bandwidth than what typical 3G, LTE or Wifi connections can deliver in a sustainable way. Moreover, the useable bandwidth of the network varies over time and is not known a priori. As a result, generated JPEG-frames that cannot be sent immediately over het network are temporarily stored in the network send buffer at TCP kernel-level. Consequently, undesired latency is created, as buffered frames will be 'old' by the time they reach the client. Moreover, if the network send buffer is filled completely and the server wants to send too much bytes over a TCP session, the TCP flow control, being a control of transport of traffic from server to client over a TCP connection, will cut down the connection and video throughput will completely deteriorate. Whenever the connection recovers, the kernel will have buffered a lot of frames, leading to unacceptable latency at the client side.

At present, there is no MJPEG solution that allows for ultra-low latency and at the same time ensuring a reliable transport in varying bandwidth conditions.

Amongst others, it is therefore an object to disclose embodiments of an apparatus, being implementable without client-side support, that reliably uses whatever bandwidth is offered by the network, and allows to provide real-time video at ultra-low latency.

This object is achieved, according to a first example aspect of the present disclosure, by an apparatus as defined by claim 1, comprising:
- a frame generator configured to receive a video and transform the video into a frame flow, comprising a flow of frames sequentially generated at a framerate, where every frame is encoded individually in an image file at an encoding quality level, thereby being compressed independently from any other frame;
- a data buffer configured to receive the frame flow, and temporarily store received data;
- a control unit configured to obtain a size measure of the data buffer, and to adapt the frame flow based on a comparison of the size measure with a predefined setpoint representing a desired amount of buffered frames, such that the size measure is controlled to the predefined setpoint,
   wherein the control unit comprises a controller configured to calculate an adaptation of the frame flow, representing the degree to which the frame flow needs to be adapted, wherein the controller is a proportional controller configured to calculate the adaptation of the frame flow, the adaptation being proportional to the difference between the size measure and the predefined setpoint,
   or wherein the controller is a Proportional-Derivative controller configured to calculate the adaptation of the frame flow, the adaptation comprising:
      - an adaptation proportional to the difference between the size measure and the predefined setpoint, and
      - an adaptation based on the speed at which the size measure changes;
- a transmitter unit configured to transmit data from the data buffer via a network connection to a video client following the actual available bandwidth in the network connection.

Thus, example embodiments of the disclosure concern an apparatus, e.g. a server device for real-time streaming of a video over a network. The apparatus may be further configured to communicate with a client device, e.g. a mobile phone or tablet, over a network. The network connection is e.g. a mobile connection, e.g. 3G, 4G, Wifi, ..., of which the available bandwidth may vary over time. The network connection makes use of a transfer protocol, e.g. TCP, which may in turn be used by e.g. a HTTP protocol. A video stream may e.g. be generated with a digital camera, after which it may be provided to the apparatus which is configured to process the received video and to send a data stream over the network towards the client device, where the received images may be decoded and played in a video player. Real-time streaming implies that an image played at the client side is shown at a moment in time very close to the moment the camera has actually recorded that image. Alternatively, the real-time video may be provided from another server to the apparatus which other server may have stored this video in a memory.

In example embodiments, the apparatus comprises a frame generator, which is configured to transform the video into a frame flow. A frame flow is a sequence of encoded frames generated at a framerate, where a frame is encoded individually in an image file. The framerate corresponds to the number of frames that is generated per second. Every received frame is encoded individually in an image file, e.g. a JPEG file. This means that compression of a frame is done independently from any other frame, i.e. no inter-frame coding is used. This has the advantage that no latency is introduced due to dependencies between frames. Furthermore, in a solution where every frame is encoded separately in e.g. a JPEG file, all required decoding information is embedded in the JPEG data. Consequently, such a solution can be used wherever HTTP is supported; availability of e.g. a HTML5 player is sufficient. This has the advantage that concerning the implementation of the apparatus in the form of a server device, no modifications to or support from the client side are required.

In sample embodiments, each frame is encoded at an encoding quality level. Typically, the encoding makes use of a lossy compression. The encoding quality level is a parameter of the compression algorithm, e.g. a JPEG compression algorithm, and defines a desired quality level of the compressed images. Based on the encoding quality level, the compression algorithm determines how much the image is compressed, and thus the extent to which image quality losses are introduced. E.g. a JPEG compression algorithm typically accepts an encoding quality level between 0 and 100, and adapts its compression logic accordingly. In an example, when a non-compressed image is described in terms of individual pixels, a compressed image may be defined by the compression algorithm in terms of partitions larger than pixels, thereby lowering the image quality, e.g. the sharpness of the image. Applying a lower encoding quality therefore results in a reduced size of the encoded image file. The frame flow represents a sequence of encoded image files, at a certain bitrate, i.e. a number of bits per second. The frame flow may be adapted, e.g. by adapting the framerate, i.e. the number of frames per second, and/or by adapting the number of bits per frame. The number of bits per frame may for example be adapted by changing the encoding quality level. For example, an interface may be available by which a setpoint for the framerate and/or encoding quality level may be given to the frame generator.

In example embodiments, the apparatus comprises a data buffer configured to receive the frame flow, and temporarily store received data. The data buffer receives data by accepting the frame flow generated by the frame generator. On the other hand, data is extracted from the data buffer by the transmitter unit that transmits a data stream to the network. Data that cannot be transmitted immediately, are temporarily stored in the data buffer. The data buffer may e.g. be a packet buffer.

In example embodiments, the apparatus comprises a control unit configured to obtain a size measure of the data buffer, and to adapt the frame flow based on that size measure. A size measure of the data buffer is e.g. the amount of buffered bytes. The latter may e.g. be given as a number of buffered frames, where this number may be a decimal number. Another example of a size measure is the degree to which the buffer size has changed over time. In a further embodiment, an interface may be available that allows the control unit to obtain a size measure. Based on the obtained size measure, the frame flow is adapted. For example, a Proportional-Derivative controller is used for this. Adapting the frame flow means that settings of the frame generator are changed, such that the generated bitrate, i.e. number of bits per second, is altered. For example, the framerate may be adapted, i.e. the rate at which frames are generated may be changed. In another example, the encoding quality level may be adapted, i.e. by changing the degree of compression, the file size of the encoded images is altered. Optionally, a combination of settings, e.g. both the framerate and the encoding quality level, may be adapted based on the obtained size measure. For example, based on the obtained size measure, e.g. the buffered data size has increased, the control unit may initially decrease the frame rate, while keeping the encoding quality level at a constant value. When the frame rate has reached a predefined minimal value, e.g. 5 fps, the controller may keep the frame rate constant, while decreasing the encoding quality level.

Adapting the frame flow based on the obtained size measure of the data buffer has the advantage that, as soon as the available bandwidth of the network changes, this will instantaneously be identifiable in the size measure, and the frame flow can be adapted accordingly. Such a fast reaction to changing bandwidth conditions makes it possible to perfectly control the amount of buffered data, and avoids that too much frames are buffered when e.g. the available bandwidth drops as a consequence of changing network conditions. For example, the data buffer may be controlled such that the amount of queued bytes is exactly one or two frames. In this way, ultra-low latency, with a latency of a few frames, corresponding to e.g. 30-90 ms of latency, can be obtained. Therefore, the apparatus, e.g. a server device, allows for applications where the physical world is activated based on recorded images, in which producing a non-stuttering stream of images at large throughput is of secondary importance compared to obtaining ultra-low latency. Examples of such applications are the use of real-time video to control drones, or to control medical equipment during surgery.

The fast reaction of the control unit when bandwidth conditions are changing, results in obtaining ultra-low latency. This would not be attainable if the amount of buffered data cannot be measured and controlled. E.g., if the frame flow would be adapted based on an estimated transmission time of an image file, a controller would have to wait for the transmission of a complete file until it is noticed that the available bandwidth has dropped. Conversely, by monitoring the size of the data buffer, a direct measurement is obtained of how the available bandwidth changes.

Furthermore, by controlling the data buffer size, there is no risk of sending too much bytes over the network connection. Therefore, situations in which e.g. TCP flow control would cut down the connection are avoided. On the other hand, by controlling the data buffer e.g. at one or two frames, data will be available almost any time. Exceptionally, the data buffer may be empty for a short time, e.g. when a sudden increase in bandwidth occurred. The data available in the data buffer is transmitted to a network connection.. In this way, the available bandwidth, imposed by the network or client device, is optimally used and a maximal throughput is realised besides obtaining ultra-low latency.

The control unit is configured to compare the obtained size measure with a predefined setpoint for the size measure, and to adapt the frame flow based on the value of the size measure and/or the variation over time of the size measure. For example, a setpoint for the size measure of the data buffer is chosen as being one or two frames, and a controller is used to adapt the frame flow such that the amount of queued bytes in the data buffer equals the setpoint of one or two frames. For example, a Proportional-Derivative controller, i.e. a PD-controller, may be used to calculate to which degree the frame flow needs to be adapted. Considering the data buffer with an input flow defined by the frame flow generated by the frame generator, and an output flow imposed by the transmitter unit, the control unit may consider the number of buffered frames as a process value. Based on the difference between the measured process value, and the desired setpoint, e.g. one or two buffered frames, it may calculate an adaptation of the frame flow, e.g. how much the framerate or encoding quality need to change. A proportional adaptation may be used. In another embodiment, the speed at which the buffered content changes may be taken into account to decide on the adaptation of the frame flow, i.e. a derivative term is included in the controller. Optionally, a proportional as well as a derivative term are used within the controller. Optionally, also an integral term may be present, e.g. by using a PID-controller. Adapting the frame flow based on the value of the size measure and/or the variation over time of the size measure has the advantage that a fast control loop is obtained, enabling to keep the size measure of the data buffer almost constantly at the predefined setpoint value.

In sample embodiments of the apparatus, the control unit comprises a Proportional-Derivative controller configured to adapt the frame flow based on the size measure such that the size measure is controlled to a predefined setpoint. This has the advantage that the size measure of the data buffer can be controlled in an accurate and fast way, by applying proportional-based as well as derivate-based adaptations to the frame flow.

In example embodiments, the apparatus comprises a transmitter unit configured to transmit data from the data buffer via a network connection to a video client. As a result, the data stream transmitted by the transmitter unit is following the actual available bandwidth of the network. For example, the transmitter unit may comprise a well-known TCP socket. Transmitting data from the data buffer to the network following the actual available bandwidth has the advantage that, as long as data is available in the data buffer, the available bandwidth is optimally used. Moreover, the available bandwidth may be variable and does not need to be known beforehand.

In sample embodiments of the apparatus, as defined by claim 2, the transmitter unit comprises a network socket with a transmit buffer capacity at least 10 times smaller than an average size of an image file. A network socket may e.g. be a well-known TCP socket, and a transmit buffer is e.g. the buffer capacity of such a TCP socket, i.e. a temporary storage of data before it is sent over the network. Typically, a network socket is implemented at the kernel level. The kernel is a central module of the operating system. Kernel space is reserved for running the privileged operating system kernel at a higher security level, and is strictly separated from the user space where the application software executes. A network socket may be configured e.g. by means of an API, e.g. a setsockopt API may be used to configure a TCP socket. In particular, the buffer capacity of the network socket may be configured using such an API. When the transmit buffer capacity is at least 10 times, or 1 order of magnitude, smaller than an average size of an image file, buffering at the network socket is small compared to the buffering in the data buffer. In another embodiment, the transmit buffer capacity at the kernel level may be 100 times, or 2 orders of magnitude, smaller than an average size of an image file. In yet another example embodiment, a setsockopt API may be used to set the TCP socket buffer capacity to zero. This means practically no buffering takes place at the network socket, but practically all buffering is done in the data buffer. This has the advantage that the amount of buffered data can be measured through interfacing with the data buffer. For a network socket, typically implemented at the kernel level, measuring the size of the buffered content may be impossible, e.g. when no such interface is available. Moreover, measuring a buffer size at the kernel level would bring an additional time cost. The ability to measure the size of buffered data has the advantage that the amount of buffered frames can be controlled, which results in obtaining ultra-low latency.

In sample embodiments of the apparatus, as defined by claim 3, the control unit is configured to adapt the frame flow by adapting the framerate and/or by adapting the encoding quality level. Adapting the frame flow means that settings of the frame generator are changed, such that the generated bitrate is altered. For example, the frame flow may be adapted by changing only the framerate, i.e. the rate at which image files are generated. In another example embodiment, the frame flow may be adapted by changing only the encoding quality level, i.e. the degree of compression and thus the size of an image file. In yet another example, the frame flow may be adapted by changing both the framerate and the encoding quality level. This has the advantage that depending on the specific application or preferences of a user, the frame flow may be adapted in a different way. Thus, priorities may defined concerning the level of image quality due to compression or the throughput of images, or an optimal trade-off between those requirements may be defined.

In sample embodiments of the apparatus, as defined by claim 4, the control unit is configured to adapt the frame flow by adapting the scale of a frame. The scale of a frame e.g. defines its height and width. E.g., by halving the height and width of a frame, the image file size is reduced with a factor four, thereby reducing the bitrate corresponding with the frame flow. This has the advantage that yet another parameter, besides the framerate and encoding quality level, may be used to adapt the frame flow in function of the obtained size measure of the data buffer.

In sample embodiments of the apparatus, as defined by claim 5, the control unit is configured to receive a user-defined control strategy, where the control strategy defines the one or more parameters to be used to adapt the frame flow, and the one or more parameters are to be selected from the group of: the framerate, the encoding quality level, or the scale. This means a user may select a control strategy, e.g. where in a first strategy priority is given to adapting the framerate, while in another strategy priority is given to adapting the encoding quality level. This has the advantage that the frame flow is adapted according to the obtained size measure of the data buffer, but depending on the specific application or user, different control strategies may be chosen. For example, in an application where providing a reasonable level of image quality is important, adapting the framerate may be the chosen control strategy. In an application where the level of image quality is less important, an adaptation based on the encoding quality level may be preferred.

In sample embodiments of the apparatus, as defined by claim 6, the control unit is configured to increase the frame flow if the size measure is inferior to a predefined setpoint. Increasing the frame flow may be done by increasing the framerate if the framerate is lower than a predefined maximal value or otherwise by increasing the encoding quality level. For example, based on the obtained size measure, the control unit may first determine the direction of the frame flow adaptation, i.e. a frame flow increase or decrease. If an increase of the frame flow is needed, e.g. when the available bandwidth has increased, the control unit may first check the actual value of the framerate. If the latter is lower than a predefined value, e.g. 30 fps, the control unit may increase the framerate. If the actual framerate is higher than a predefined value, e.g. 30 fps, a further increase may be not useful. Therefore, in this case the framerate may be kept at the actual value, and the encoding quality level may be increased, i.e. the compression is decreased. Increasing the encoding quality level may imply that a substantial increase of the frame flow is introduced. As such, the controller may converge to a slightly lower framerate with a higher encoding quality level. This has the advantage that for maximally using the available bandwidth, an optimal balance between framerate and encoding quality is obtained.

Furthermore, in sample embodiments of the apparatus, as defined by claim 6, the control unit is configured to decrease the frame flow if the size measure exceeds a predefined setpoint. Decreasing the frame flow may be done by decreasing the framerate if the framerate is higher than a predefined minimal value or otherwise by decreasing the encoding quality level. For example, based on the obtained size measure, the control unit may decide that a decrease of the frame flow is needed. Next, it may first check the actual value of the framerate. If the latter is higher than a predefined value, e.g. 5 fps, the control unit may decrease the framerate. If the actual framerate is lower than a predefined value, e.g. 5 fps, a further decrease may be not appropriate as this would substantially degrade the throughput of images. Therefore, in this case the framerate may be kept at the actual value, and the encoding quality level may be decreased, i.e. the compression is increased. Decreasing the encoding quality level may imply that a substantial decrease of the frame flow is introduced. As such, the controller may converge to a slightly higher framerate with a lower encoding quality level. This has the advantage that an optimal balance between framerate and encoding quality is obtained, thereby reaching ultra-low latency as well as an optimal throughput.

In sample embodiments of the apparatus, as defined by claim 7, the size measure of the data buffer is an amount of temporarily stored frames currently present in the data buffer. This means the amount of queued bytes in the data buffer is expressed as an amount of frames, e.g. by using an actual or average size of a frame file. The amount of frames does not necessarily have to be a rounded value. E.g. an amount like 1,3 frames is possible. As such, the control actions of the control unit can be defined in terms of buffered frames, e.g. also the setpoint of the size measure may be defined in these terms. This has the advantage that easily a control strategy in view of obtaining ultra-low latency may be defined, as the number of lately transmitted frames is the relevant parameter when monitoring latency at the client level.

In sample embodiments of the apparatus, as defined by claim 8, the frame generator uses JPEG compression to encode a frame into an image file. This means a sequence of JPEG-files will be transmitted by the apparatus, i.e. an MJPEG-solution is obtained. JPEG is a commonly used method of lossy compression for digital images. This has the advantage that on a client device such as a mobile phone or tablet, JPEG images can be rendered without any additional tools by any HTML compatible browser.

According to a second example aspect, as defined by claim 9, a method is disclosed, comprising:
- receiving a video;
- transforming said video into a frame flow, comprising:
   o generating a flow of sequential frames at a framerate,
   o encoding the frames individually in an image file at an encoding quality level, thereby compressing every frame independently from any other frame;
- receiving the frame flow by a data buffer;
- temporarily storing received data in the data buffer;
- obtaining a size measure of the data buffer;
- adapting the frame flow based on a comparison of the size measure with a predefined setpoint representing a desired amount of buffered frames, such that the size measure is controlled to the predefined setpoint,
   wherein an adaptation of the frame flow is calculated by a controller, the adaptation representing the degree to which the frame flow needs to be adapted, and
   wherein the controller is a proportional controller configured to calculate the adaptation of the frame flow, the adaptation being proportional to the difference between the size measure and the predefined setpoint,
   or wherein the controller is a Proportional-Derivative controller configured to calculate the adaptation of the frame flow, the adaptation comprising:
      - an adaptation proportional to the difference between the size measure and the predefined setpoint, and
      - an adaptation based on the speed at which said the measure changes;
- transmitting data from the data buffer via a network connection to a video client following the actual available bandwidth in the network connection.

According to a third example aspect, as defined by claim 10, a computer program product is disclosed, comprising computer-executable instructions for causing a device to perform at least the following:
- receiving a video;
- transforming the video into a frame flow, comprising:
   o generating a flow of sequential frames at a framerate,
   o encoding the frames individually in an image file at an encoding quality level;
- receiving the frame flow by a data buffer;
- temporarily storing received data in the data buffer;
- obtaining a size measure of the data buffer;
- adapting the frame flow based on a comparison of the size measure with a predefined setpoint representing a desired amount of buffered frames, such that the size measure is controlled to the predefined setpoint,
   wherein an adaptation of the frame flow is calculated by a controller, the adaptation representing the degree to which the frame flow needs to be adapted, and
   wherein the controller is a proportional controller configured to calculate the adaptation of the frame flow, the adaptation being proportional to the difference between the size measure and the predefined setpoint,
   or wherein the controller is a Proportional-Derivative controller configured to calculate the adaptation of the frame flow, the adaptation comprising:
      - an adaptation proportional to the difference between the size measure and the predefined setpoint, and
      - an adaptation based on the speed at which said the measure changes;
- transmitting data from the data buffer via a network connection to a video client following the actual available bandwidth in the network connection.

### Brief Description of the Drawings

Some example embodiments will now be described with reference to the accompanying drawings.
Fig. 1 gives a functional block scheme of an example embodiment of an implementation of an apparatus in the form of a server device.
Fig. 2 gives a functional block scheme of an example embodiment of an implementation of an apparatus in the form of a server device, used in a solution where it communicates with a client device over a network.
Fig. 3 schematically shows the time evolution of buffered frames in a data buffer at the user level, when an example embodiment of an apparatus in the form of a server device is used.
Fig. 4 gives an example embodiment of a control strategy implemented in an example embodiment of an apparatus in the form of a server device.
Fig. 5 schematically shows the evolution of the framerate and encoding quality level when using an example embodiment of a control strategy implemented in an example embodiment of an apparatus in the form of a server device.

### Detailed Description of Embodiment(s)

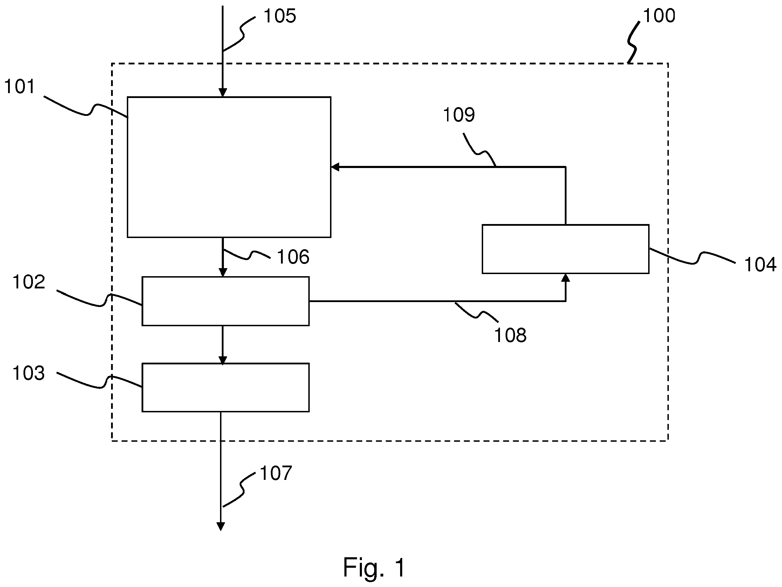

Fig. 1 gives a functional block scheme of an example embodiment of an implementation of an apparatus in the form of a server device. The apparatus (100) comprises a frame generator (101), a data buffer (102), a transmitter unit (103), and a control unit (104). A real-time video stream (105) is received by the frame generator (101). The frame generator (101) is configured to transform the video stream (105) into a frame flow (106). The frame flow (106) is a sequence of frames, where a frame is encoded individually in an image file. For example, it is a sequence of JPEG image files. The time interval at which frames are generated is defined by a framerate. The image quality of an image file is defined by an encoding quality level. The encoding quality level is a parameter of the compression algorithm, e.g. a JPEG compression algorithm, and defines a desired quality level of the compressed images. Based on the encoding quality level, the compression algorithm determines how much the image is compressed, and thus the extent to which image quality losses are introduced. E.g. a JPEG compression algorithm typically accepts an encoding quality level between 0 and 100, and adapts its compression logic accordingly. In an example, when a non-compressed image is described in terms of individual pixels, a compressed image may be defined by the compression algorithm in terms of partitions larger than pixels, thereby lowering the image quality, e.g. the sharpness of the image. The data buffer (102) is configured to receive the frame flow (106), and to temporarily store the received data. The data buffer (102), e.g. a packet buffer, is implemented at the user level. The control unit (104) is configured to obtain a size measure (108) of the data buffer (102). The size measure (108) is e.g. an amount of buffered bytes or frames. The control unit (104) is further configured to, based on the obtained size measure (108), adapt the frame flow (106), e.g. by adapting the framerate, the encoding quality level, the image scale, or a combination of any of those parameters. The transmitter unit (103) is configured to transmit data from the data buffer (102) to a network connection (107). The transmitter unit (103) is typically implemented at the kernel level and has the function to transmit data to the network (107) without additional buffering, thereby using the available bandwidth offered by the network (107).

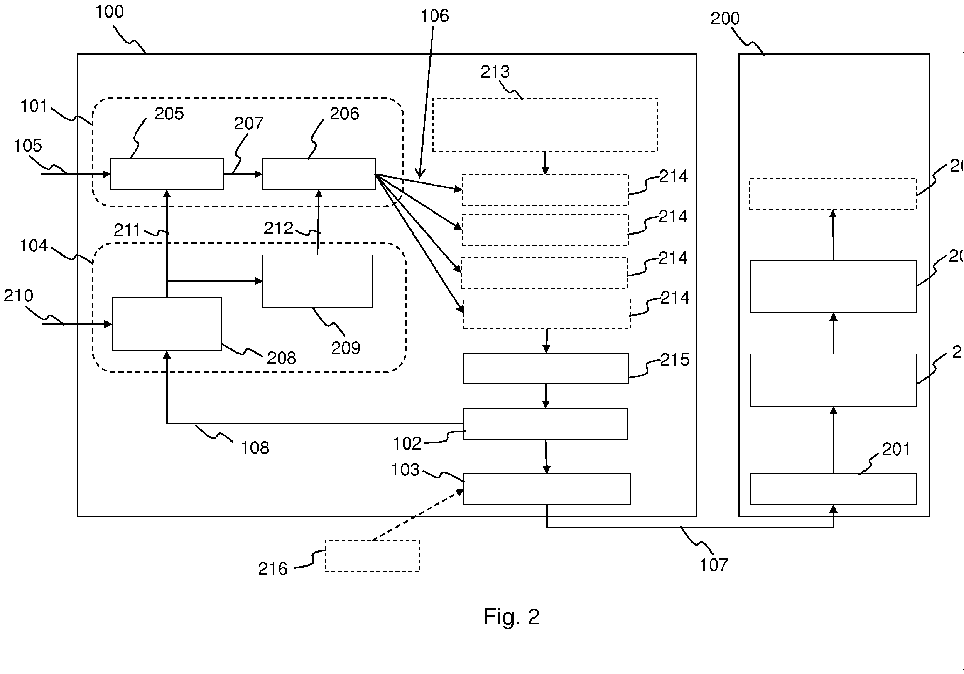

Fig. 2 gives a functional block scheme of an example embodiment of an apparatus (100) in the form of a server device, used in a solution with a client device (200). A network connection (107) is provided to enable a communication between the apparatus (100) and the client device (200). A client device (200) is e.g. a mobile phone or tablet. The network connection (107) is e.g. a mobile connection, e.g. 3G, 4G, Wifi, .... The network connection (107) makes use of a transfer protocol, e.g. TCP, which may in turn be used by e.g. a HTTP protocol. The apparatus (100) comprises a HTTP server (215) and a TCP server (103). The client device (200) comprises a TCP client (201) and a browser HTTP client (202). The TCP client (201) is configured to set up a connection with the TCP server (103), which is established after acceptance of the TCP server (103). When using the example embodiment of Fig. 2, every HTTP request uses TCP as its transfer protocol. The available bandwidth, provided by the network connection (107), typically is not known a priori and varies over time. Typically, the available bandwidth is imposed by the network speed.

The frame generator (101) is configured to receive a real-time video stream (105). The video stream (105) is e.g. generated with a digital camera. The frame generator (101) comprises a videorate element (205) and an encoding element (206). The videorate element (205) is configured to set the framerate, which results in a pipeline of frames (207). The encoding element (206) is configured to encode a frame individually in an image file. E.g., a frame is encoded in JPEG, resulting in image files (214) with .jpg file extension. JPEG encoding makes use of lossy compression. Typically, JPEG-files have a file size of 32 kB to 500 kB. The encoding is done at a given encoding quality level. The encoding quality level determines how much the image is compressed, and thus the extent to which image quality losses are introduced. In the embodiment of Fig. 2, an interface with the frame generator (101) allows to provide settings for both the framerate (211) and the encoding quality level (212) to the frame generator (101).

When a client device (200) connects to the HTTP server (215), a HTTP header (213) is sent that informs the client (200) to expect a sequence of individually renderable parts, i.e. the encoded video frames (214). On the client device (200), the images are rendered, e.g. with a browser JPEG renderer (203). This results in frames (204) shown to the user at the client side. Any HTML compatible browser suffices to render JPEG images, no additional tools are needed at the client side.

The apparatus (100) comprises a data buffer (102), e.g. a packet buffer, that allows to temporarily store received data. The data buffer (102) may have an interface by which the size measure (108) can be obtained. Therefore, the data buffer is typically implemented at the user level or application level. The apparatus (100) further comprises a transmitter unit (103), e.g. a TCP socket or TCP server, which is typically implemented at the kernel level. The TCP socket (103) is configured with small buffering capacity inside the kernel, e.g. by means of a setsockopt API (216). For example, the buffering capacity at the kernel level may be configured 10 or 100 times smaller than a typical image file size. Typically, JPEG-files have a file size of 32 kB to 500 kB. In another example, a setsockopt API may be used to set the TCP socket buffer capacity to zero. Setting the kernel buffering capacity to zero through a setsockopt API, may result in a remaining buffering capacity of e.g. 50 to 100 bytes at the kernel level. During use of the apparatus (100) the amount of buffered data in the data buffer (102) will grow when the transmitter unit (103) cannot get more bytes to the client side, and will reduce whenever the TCP transmission ramps up again. The control unit (104) is configured to continuously monitor the evolution of the buffered amount of data and to adapt the frame flow (106) to steer the buffered size back to a predefined value, e.g. one or two buffered frames.

In the example embodiment of Fig. 2, the control unit (104) comprises a PID-controller (208) and a quality controller (209). The PID-controller (208) is configured to obtain a size measure (108) of the data buffer (102). E.g. the size measure (108) is expressed as an amount of buffered frames. The PID-controller (208) also receives a setpoint (210) for the amount of buffered frames. For example, the setpoint (210) is defined as one or two frames. In the example embodiment of Fig. 2, the PID-controller (208) is configured to compare the measured amount of frames (208) with the setpoint (210). The PID-controller (208) is further configured to adaptively set the framerate - and hence, the required bandwidth - so that the amount of queued bytes inside the data buffer (102) is kept at the setpoint value (210). As a result, no unacceptable latency builds up. The control action defined by the PID-controller (208) may be proportionally to the error, and/or a derivative action based on the speed at which the amount of buffered frames changes may be included. Optionally, also an integral action may be present.

When during use of the apparatus (100) the size measure (108) shows that the amount of buffered data is growing, and therefore the frame flow (106) needs to be reduced, the PID-controller (208) will suggest an adapted framerate, lower than the actual framerate. If this suggested framerate is higher than a predefined value, e.g. 5 fps, its value is given to the frame generator (101), as a setting (211). If the suggested framerate goes below the predefined value of e.g. 5 fps, no new setting for the framerate (211) is given, but a request is sent to the quality controller (209) to decrease the encoding quality level (212), i.e. increase the compression. Doing so, the PID-controller may converge to a slightly higher framerate (211) with lower encoding quality level (212).

On the other hand, If the size measure (108) shows that the data buffer (102) is reducing in size, and therefore the frame flow (106) needs to be increased, the PID-controller (208) will suggest an adapted framerate, higher than the actual framerate. If this suggested framerate is lower than a predefined value, e.g. 30 fps, its value is given to the frame generator (101), as a setting (211). If the suggested framerate goes above the predefined value of e.g. 30 fps, no new setting for the framerate (211) is given, but a request is sent to the quality controller (209) to increase the encoding quality level (212), i.e. decrease the compression. Doing so, the PID-controller may converge to a slightly lower framerate (211) with higher encoding quality level (212).

In the example embodiment of Fig. 2, both the framerate and the encoding quality are adapted to ensure minimal latency and maximal useable bandwidth, without a priori knowing what bandwidth is available and without requiring modifications to or support from the client-side implementation. As a consequence, the solution reliably uses whatever bandwidth is offered, without being impacted by increasing latency and without the risk of TCP flow control being activated.

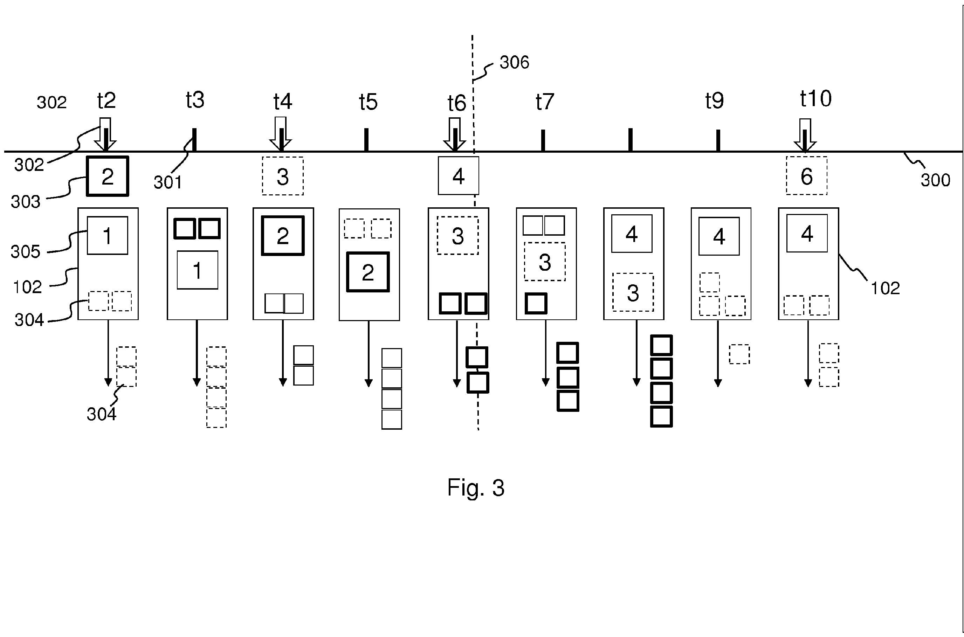

This is further illustrated in Fig. 3, where an example is shown of how the framerate is lowered in function of a bandwidth reduction, when using the apparatus (100). The encoding quality level is assumed to be kept constant. Fig. 3 shows a timeline (300) and points in time (301). The points in time (301) are numbered as t2 to t10. The points in time (302) provided with a downward pointing arrow, indicate moments where a frame (303) is selected from the video stream (105). The generated frames (303) are encoded and temporarily buffered in the data buffer (102) at user level before being transmitted. In Fig. 3, the data buffer (102) contains complete image files (305) as well as data packets (304). The partitioning of an image file into data packets is typically defined by the used protocol. In the representation of Fig. 3 the shown partitioning is merely schematic. The transmitter unit (103), that transmits the stream of data packets to the network, is not shown in Fig. 3.

Fig. 3 shows a moment in time (306) at which the available bandwidth drops. Starting from moment (306), the available bandwidth is only half of the bandwidth available before (306). Before the moment (306), the buffered content in the data buffer (102) equals 1,5 frames. After the moment (306), the data buffer starts growing, i.e. it becomes larger than 1,5 frames. Such a growth will promptly be detected by the control unit (104), e.g. at t7 in Fig. 3. As the control unit (104) is configured to continuously monitor the size measure (108), it even does not have to wait for a compete file transmission before it is detected that something has changed in the available bandwidth. As a reaction to the increased buffer size, the framerate will be lowered. In the example of Fig. 3, the framerate is halved. This implies that, instead of adding a new frame (frame 5) at t8, as would be done in case of a constant framerate, a new frame (frame 6) is only added at t10. Therefore, this solution prefers to send frames less frequently, but guarantees that transmitted frames are not too old. Consequently, ultra-low latency can be obtained. Fig. 3 shows that at t10, the buffered size is steered back to the setpoint of 1,5 frames.

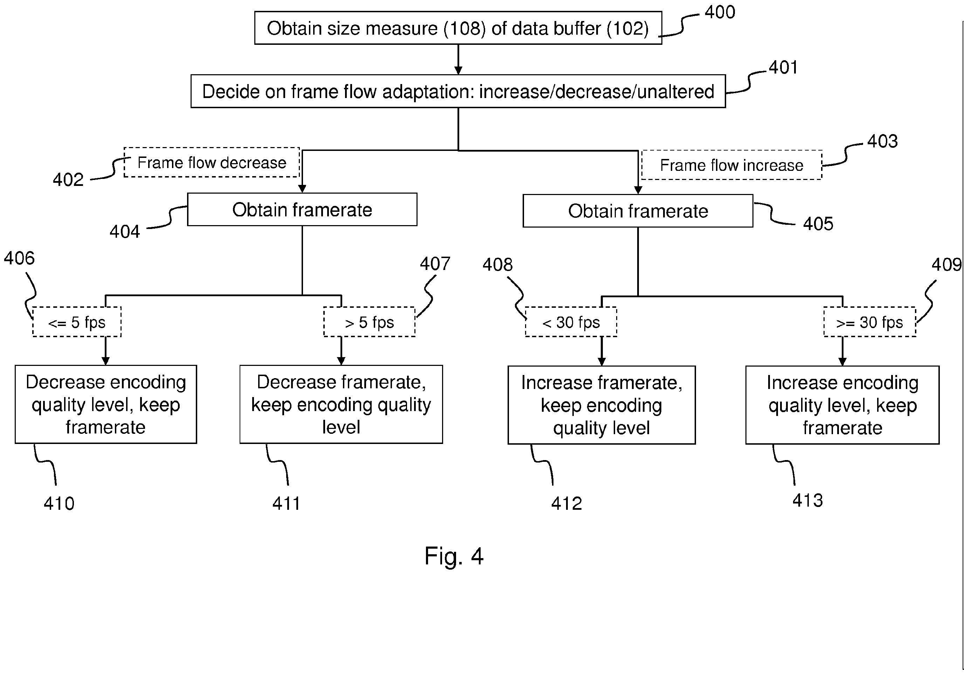

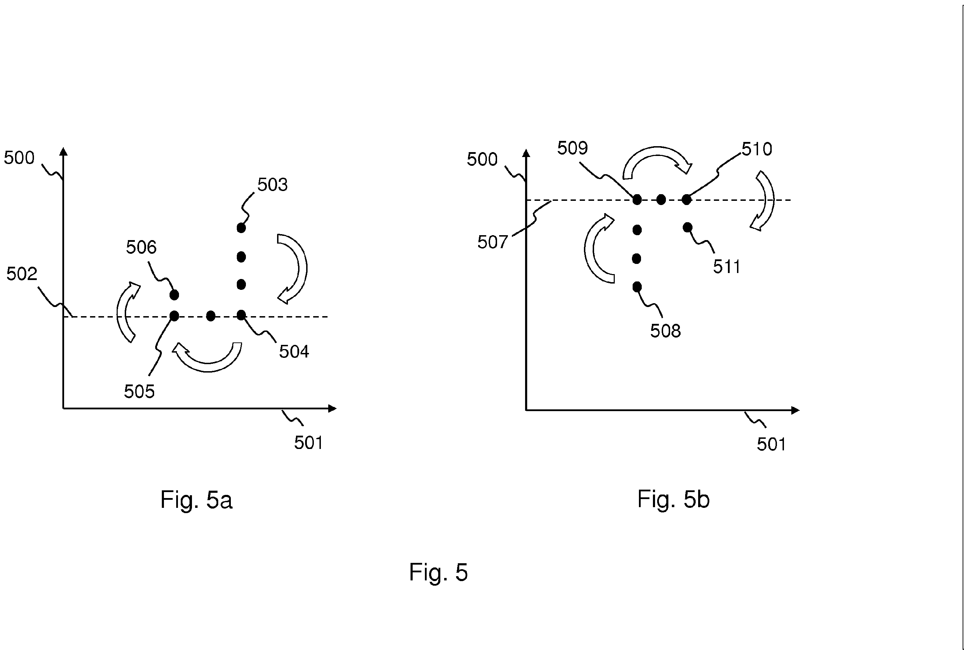

Fig. 4 and 5 further illustrate a possible control strategy, according to an example embodiment of the apparatus (100). The control strategy is implemented by the control unit (104) and uses the obtained size measure (108) in order to adapt the frame flow (106). Fig. 4 illustrates the steps followed within the implemented control strategy. Fig. 5 shows two examples of the evolution over time of the framerate (211) and the encoding quality level (212), as a result of the implemented control strategy of Fig. 4. The axis (500) represents the framerate, while the axis (501) represents the encoding quality level. The dots represent the evolution over time of the framerate and the encoding quality. In Fig. 5a the settings evolve from (503) onwards to (504), and further towards (505) and (506). In Fig. 5b the settings evolve from (508) onwards to (509), and further towards (510) and (511).

In the example embodiment of Fig. 6, a first step (400) is defined in which the size measure (108) of the data buffer (102) is obtained by the control unit (104). Based on the obtained size measure (108), it is decided in step (401) whether the frame flow (106) needs to be increased, decreased, or remain unaltered. If it is detected that a frame flow decrease is needed, as in step (402), the actual framerate is checked in step (404). If it is higher than 5 fps, as in step (407), the framerate is decreased in step (411), while the encoding quality level remains unaltered. If it is lower than 5 fps or equals 5 fps, as in step (406), the framerate remains unaltered and the encoding quality level is decreased, see step (410).

Fig. 5a illustrates a situation where it is detected that a frame flow decrease is needed, e.g. when the available bandwidth has dropped. Initially the framerate and encoding quality are set at the values represented by point (503). As the available bandwidth reduces, initially the framerate is sequentially reduced at constant encoding quality level, until point (504) is reached. At the point (504) the framerate reaches a predefined minimal value (502), e.g. 5 fps. When a further reduction of the frame flow is needed, this is implemented through a reduction of the encoding quality level, at constant framerate, see the evolution towards point (505). At the point (505) the reduced quality level leads to a lower input stream to the data buffer (102) than the output flow defined by the available bandwidth. As such, the controller will react by increasing the framerate slightly, see point (506). Thus, the controller converges towards a slightly higher framerate with worse image quality.

On the other hand, if in the example embodiment of Fig. 4, it is detected that a frame flow increase is needed, as in step (403), the actual framerate is checked in step (405). If it is lower than 30 fps, as in step (408), the framerate is increased in step (412), while the encoding quality level remains unaltered. If it is higher than 30 fps or equals 30 fps, as in step (409), the framerate remains unaltered and the encoding quality level is increased, see step (413).

Fig. 5a illustrates a situation where it is detected that a frame flow increase is needed, e.g. when the available bandwidth has increased. Initially the framerate and encoding quality are set at the values represented by point (508). As the available bandwidth increases, initially the framerate is sequentially increased at constant encoding quality level, until point (509) is reached. At the point (509) the framerate reaches a predefined maximal value (507), e.g. 30 fps. When a further increase of the frame flow is needed, this is implemented through an increase of the encoding quality level, at constant framerate, see the evolution towards point (510). At the point (510) the increased quality level leads to a higher input stream to the data buffer (102) than the output flow defined by the available bandwidth. As such, the controller will react by decreasing the framerate slightly, see point (511). Thus, the controller converges towards a slightly lower framerate with better image quality.

Fig. 4 and Fig. 5 show an example embodiment of a control strategy. Other embodiments of a control strategy are possible however, e.g. where only the framerate is adapted, only the encoding quality level is adapted, or a combined setpoint for the framerate and encoding quality is calculated in a different way compared to the control strategy of Fig. 4 and Fig. 5. In other embodiments, other parameters may be used to adapt the frame flow, e.g. by adapting the scale of the images. In yet another embodiment, the control unit may be configured to receive a user-defined control strategy, defining which parameters are to be used to adapt the frame flow, and which priorities and control logic is to be taken into account.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Apparatus (100) comprising:
- a frame generator (101) configured to receive a video (105) and transform said video (105) into a frame flow (106), comprising a flow of frames sequentially generated at a framerate, where every frame is encoded individually in an image file (214) at an encoding quality level, thereby being compressed independently from any other frame;
- a data buffer (102) configured to receive said frame flow (106), and temporarily store received data;
- a control unit (104) configured to obtain a size measure (108) of said data buffer (102), and to adapt said frame flow (106) based on a comparison of said size measure (108) with a predefined setpoint (210) representing a desired amount of buffered frames, such that said size measure (108) is controlled to said predefined setpoint (210),
wherein said control unit (104) comprises a controller (208) configured to calculate an adaptation of said frame flow (106), representing the degree to which the frame flow (106) needs to be adapted,
wherein said controller (208) is a proportional controller (208) configured to calculate said adaptation of said frame flow (106), said adaptation being proportional to the difference between said size measure (108) and said predefined setpoint (210),
or
wherein said controller (208) is a Proportional-Derivative controller (208) configured to calculate said adaptation of said frame flow (106), said adaptation comprising:
- an adaptation proportional to the difference between said size measure (108) and said predefined setpoint (210), and
- an adaptation based on the speed at which said size measure changes (108);
- a transmitter unit (103) configured to transmit data from said data buffer (102) via a network connection (107) to a video client (200) following the actual available bandwidth in said network connection (107).

2. Apparatus (100) according to claim 1,
wherein said transmitter unit (103) comprises a network socket with a transmit buffer capacity at least 10 times smaller than an average size of said image file (214).

3. Apparatus (100) according to one of the preceding claims,
wherein said control unit (104) is configured to adapt said frame flow (106) by adapting said framerate and/or by adapting said encoding quality level.

4. Apparatus (100) according to claim 1 or claim 2,
wherein said control unit (104) is configured to adapt said frame flow (106) by adapting the scale of said frame.

5. Apparatus according to claim 1 or claim 2,
wherein said control unit (104) is configured to receive a user-defined control strategy, where said control strategy defines the one or more parameters to be used to adapt said frame flow (106), and said one or more parameters are to be selected from the group of: a framerate, an encoding quality level, or a scale.

6. Apparatus (100) according to one of the preceding claims,
wherein said control unit (104) is configured to increase said frame flow (106) if said size measure (108) is inferior to said predefined setpoint (210), by increasing said framerate if said framerate is lower than a predefined maximal value or otherwise by increasing said encoding quality level, and
said control unit (104) is configured to decrease said frame flow (106) if said size measure (108) exceeds said predefined setpoint (210), by decreasing said framerate if said framerate is higher than a predefined minimal value or otherwise by decreasing said encoding quality level.

7. Apparatus (100) according to one of the preceding claims,
wherein said size measure (108) of said data buffer (102) is an amount of temporarily stored frames currently present in said data buffer (102).

8. Apparatus (100) according to one of the preceding claims,
wherein said frame generator (101) uses JPEG compression to encode said frame into said image file (214).

9. A method comprising:
- receiving a video (105);
- transforming said video (105) into a frame flow (106), comprising:
o generating a flow of sequential frames at a framerate;
o encoding every frame individually in an image file (214) at an encoding quality level, thereby compressing every frame independently from any other frame;
- receiving said frame flow (106) by a data buffer (102);
- temporarily storing received data in said data buffer (102);
- obtaining a size measure (108) of said data buffer (102);
- adapting said frame flow (106) based on a comparison of said size measure (108) with a predefined setpoint (210) representing a desired amount of buffered frames, such that said size measure (108) is controlled to said predefined setpoint (210),
wherein an adaptation of said frame flow (106) is calculated by a controller (208), said adaptation representing the degree to which the frame flow (106) needs to be adapted, and
wherein said controller (208) is a proportional controller (208) configured to calculate said adaptation of said frame flow (106), said adaptation being proportional to the difference between said size measure (108) and said predefined setpoint (210),
or
wherein said controller (208) is a Proportional-Derivative controller (208) configured to calculate said adaptation of said frame flow (106), said adaptation comprising:
- an adaptation proportional to the difference between said size measure (108) and said predefined setpoint (210), and
- an adaptation based on the speed at which said size measure changes (108);
- transmitting data from said data buffer (102) via a network connection (107) to a video client (200) following the actual available bandwidth in said network connection (107).

10. A computer program product comprising computer-executable instructions for causing a device (100) to perform at least the following:
- receiving a video (105);
- transforming said video (105) into a frame flow (106), comprising:
o generating a flow of sequential frames at a framerate;
o encoding every frame individually in an image file (214) at an encoding quality level, thereby compressing every frame independently from any other frame;
- receiving said frame flow (106) by a data buffer (102);
- temporarily storing received data in said data buffer (102);
- obtaining a size measure (108) of said data buffer (102);
- adapting said frame flow (106) based on a comparison of said size measure (108) with a predefined setpoint (210) representing a desired amount of buffered frames, such that said size measure (108) is controlled to said predefined setpoint (210)
wherein an adaptation of said frame flow (106) is calculated by a controller (208), said adaptation representing the degree to which the frame flow (106) needs to be adapted, and
wherein said controller (208) is a proportional controller (208) configured to calculate said adaptation of said frame flow (106), said adaptation being proportional to the difference between said size measure (108) and said predefined setpoint (210),
or
wherein said controller (208) is a Proportional-Derivative controller (208) configured to calculate said adaptation of said frame flow (106), said adaptation comprising:
- an adaptation proportional to the difference between said size measure (108) and said predefined setpoint (210), and
- an adaptation based on the speed at which said size measure changes (108);
- transmitting data from said data buffer (102) via a network connection (107) to a video client (200) following the actual available bandwidth in said network connection (107).

## Patentansprüche

1. Einrichtung (100), die Folgendes umfasst:
- einen Framegenerator (101), der dazu ausgelegt ist, ein Video (105) zu empfangen und das Video (105) in einen Framefluss (106) umzuwandeln, der einen Fluss von Frames umfasst, die sequenziell mit einer Framerate erzeugt werden, wo jeder Frame mit einer Codierqualitätsstufe einzeln in einer Bilddatei (214) codiert wird, wodurch er unabhängig von jedem anderen Frame komprimiert wird;
- einen Datenpuffer (102), der dazu ausgelegt ist, den Framefluss (106) zu empfangen und empfangene Daten vorübergehend zu speichern;
- eine Steuereinheit (104), die dazu ausgelegt ist, ein Größenmaß (108) des Datenpuffers (102) zu erhalten und den Framefluss (106) auf Basis eines Vergleichs des Größenmaßes (108) mit einem vordefinierten Sollwert (210), der eine gewünschte Menge von gepufferten Frames repräsentiert, anzupassen, derart, dass das Größenmaß (108) auf den vordefinierten Sollwert (210) gesteuert wird,
wobei die Steuereinheit (104) eine Steuerung (208) umfasst, die dazu ausgelegt ist, eine Anpassung des Frameflusses (106) zu berechnen, die den Umfang repräsentiert, in dem der Framefluss (106) angepasst werden muss,
wobei die Steuerung (208) eine Proportionalsteuerung (208) ist, die dazu ausgelegt ist, die Anpassung des Frameflusses (106) zu berechnen, wobei sich die Anpassung proportional zum Unterschied zwischen dem Größenmaß (108) und dem vordefinierten Sollwert (210) verhält,
oder
wobei die Steuerung (208) eine Proportionaldifferenzialsteuerung (208) ist, die dazu ausgelegt ist, die Anpassung des Frameflusses (106) zu berechnen, wobei die Anpassung Folgendes umfasst:
- eine Anpassung, die sich proportional zum Unterschied zwischen dem Größenmaß (108) und dem vordefinierten Sollwert (210) verhält, und
- eine Anpassung auf Basis der Geschwindigkeit, mit der sich das Größenmaß (108) ändert;
- eine Sendeeinheit (103), die dazu ausgelegt ist, Daten aus dem Datenpuffer (102) via eine Netzwerkverbindung (107) unter Befolgung der tatsächlich verfügbaren Bandbreite der Netzwerkverbindung (107) zu einem Videoclient (200) zu übertragen.

2. Einrichtung (100) nach Anspruch 1,
wobei die Sendeeinheit (103) eine Netzwerkbuchse mit einer Sendepufferkapazität umfasst, die mindestens 10 mal kleiner ist als eine durchschnittliche Größe der Bilddatei (214).

3. Einrichtung (100) nach einem der vorhergehenden Ansprüche,
wobei die Steuereinheit (104) dazu ausgelegt ist, den Framefluss (106) durch Anpassen der Framerate und/oder durch Anpassen der Codierqualitätsstufe anzupassen.

4. Einrichtung (100) nach Anspruch 1 oder Anspruch 2,
wobei die Steuereinheit (104) dazu ausgelegt ist, den Framefluss (106) durch Anpassen der Skalierung des Frames anzupassen.

5. Einrichtung nach Anspruch 1 oder 2,
wobei die Steuereinheit (104) dazu ausgelegt ist, eine benutzerdefinierte Steuerstrategie zu empfangen, wo die Steuerstrategie den einen oder die mehreren Parameter, die zum Anpassen des Frameflusses (106) zu verwenden sind, definiert und der eine oder die mehreren Parameter aus der Gruppe aus einer Framerate, einer Codierqualitätsstufe oder einer Skalierung auszuwählen sind.

6. Einrichtung (100) nach einem der vorhergehenden Ansprüche,
wobei die Steuereinheit (104), wenn das Größenmaß (108) kleiner ist als der vordefinierte Sollwert (210), durch Erhöhen der Framerate, wenn die Framerate kleiner ist als ein vordefinierter Höchstwert, oder andernfalls durch Erhöhen der Codierqualitätsstufe dazu ausgelegt ist, den Framefluss (106) zu erhöhen, und
die Steuereinheit (104) ist, wenn das Größenmaß (108) den vordefinierten Sollwert (210) überschreitet, durch Verringern der Framerate, wenn die Framerate größer ist als ein vordefinierter Mindestwert, oder andernfalls durch Verringern der Codierqualitätsstufe dazu ausgelegt, den Framefluss (106) zu verringern.

7. Einrichtung (100) nach einem der vorhergehenden Ansprüche,
wobei das Größenmaß (108) des Datenpuffers (102) eine Menge von vorübergehend gespeicherten Frames ist, die sich derzeit im Datenpuffer (102) befinden.

8. Einrichtung (100) nach einem der vorhergehenden Ansprüche,
wobei der Framegenerator (101) eine JPEG-Komprimierung verwendet, um den Frame in die Bilddatei (214) zu codieren.

9. Verfahren, das Folgendes umfasst:
- Empfangen eines Videos (105);
- Umwandeln des Videos (105) in einen Framefluss (106), was Folgendes umfasst:
o Erzeugen eines Flusses von sequenziellen Frames mit einer Framerate;
o einzelnes Codieren jedes Frames mit einer Codierqualitätsstufe in einer Bilddatei (214), wodurch jeder Frame unabhängig von jedem anderen Frame komprimiert wird;
- Empfangen des Frameflusses (106) von einem Datenpuffer (102) ;
- vorübergehendes Speichern von empfangenen Daten im Datenpuffer (102);
- Erhalten eines Größenmaßes (108) des Datenpuffers (102) ;
- Anpassen des Frameflusses (106) auf Basis eines Vergleichs des Größenmaßes (108) mit einem vordefinierten Sollwert (210), der eine gewünschte Menge von gepufferten Frames repräsentiert, derart, dass das Größenmaß (108) auf den vordefinierten Sollwert (210) gesteuert wird,
wobei eine Anpassung des Frameflusses (106) durch eine Steuerung (208) berechnet wird, wobei die Anpassung den Umfang, in dem der Framefluss (106) angepasst werden muss, repräsentiert, und
wobei die Steuerung (208) eine Proportionalsteuerung (208) ist, die dazu ausgelegt ist, die Anpassung des Frameflusses (106) zu berechnen, wobei sich die Anpassung proportional zum Unterschied zwischen dem Größenmaß (108) und dem vordefinierten Sollwert (210) verhält,
oder
wobei die Steuerung (208) eine Proportionaldifferenzialsteuerung (208) ist, die dazu ausgelegt ist, die Anpassung des Frameflusses (106) zu berechnen, wobei die Anpassung Folgendes umfasst:
- eine Anpassung, die sich proportional zum Unterschied zwischen dem Größenmaß (108) und dem vordefinierten Sollwert (210) verhält, und
- eine Anpassung auf Basis der Geschwindigkeit, mit der sich das Größenmaß (108) ändert;
- Übertragen von Daten aus dem Datenpuffer (102) via eine Netzwerkverbindung (107) unter Befolgung der tatsächlich verfügbaren Bandbreite der Netzwerkverbindung (107) zu einem Videoclient (200).

10. Computerprogrammprodukt, das computerausführbare Anweisungen zum Bewirken, dass eine Vorrichtung (100) mindestens Folgendes durchführt, umfasst:
- Empfangen eines Videos (105);
- Umwandeln des Videos (105) in einen Framefluss (106), was Folgendes umfasst:
o Erzeugen eines Flusses von sequenziellen Frames mit einer Framerate;
o einzelnes Codieren jedes Frames mit einer Codierqualitätsstufe in einer Bilddatei (214), wodurch jeder Frame unabhängig von jedem anderen Frame komprimiert wird;
- Empfangen des Frameflusses (106) von einem Datenpuffer (102) ;
- vorübergehendes Speichern von empfangenen Daten im Datenpuffer (102);
- Erhalten eines Größenmaßes (108) des Datenpuffers (102) ;
- Anpassen des Frameflusses (106) auf Basis eines Vergleichs des Größenmaßes (108) mit einem vordefinierten Sollwert (210), der eine gewünschte Menge von gepufferten Frames repräsentiert, derart, dass das Größenmaß (108) auf den vordefinierten Sollwert (210) gesteuert wird,
wobei eine Anpassung des Frameflusses (106) durch eine Steuerung (208) berechnet wird, wobei die Anpassung den Umfang, in dem der Framefluss (106) angepasst werden muss, repräsentiert, und
wobei die Steuerung (208) eine Proportionalsteuerung (208) ist, die dazu ausgelegt ist, die Anpassung des Frameflusses (106) zu berechnen, wobei sich die Anpassung proportional zum Unterschied zwischen dem Größenmaß (108) und dem vordefinierten Sollwert (210) verhält,
oder
wobei die Steuerung (208) eine Proportionaldifferenzialsteuerung (208) ist, die dazu ausgelegt ist, die Anpassung des Frameflusses (106) zu berechnen, wobei die Anpassung Folgendes umfasst:
- eine Anpassung, die sich proportional zum Unterschied zwischen dem Größenmaß (108) und dem vordefinierten Sollwert (210) verhält, und
- eine Anpassung auf Basis der Geschwindigkeit, mit der sich das Größenmaß (108) ändert;
- Übertragen von Daten aus dem Datenpuffer (102) via eine Netzwerkverbindung (107) unter Befolgung der tatsächlich verfügbaren Bandbreite der Netzwerkverbindung (107) zu einem Videoclient (200).

## Revendications

1. Appareil (100) comprenant :
- un générateur de trames (101) configuré pour recevoir une vidéo (105) et transformer ladite vidéo (105) en un flux de trames (106), comprenant un flux de trames générées séquentiellement à une fréquence de trames, où chaque trame est codée individuellement dans un fichier image (214) à un niveau de qualité de codage, étant ainsi compressée indépendamment de toute autre trame ;
- un tampon de données (102) configuré pour recevoir ledit flux de trames (106), et stocker temporairement des données reçues ;
- une unité de commande (104) configurée pour obtenir une mesure de taille (108) dudit tampon de données (102), et pour adapter ledit flux de trames (106) sur la base d'une comparaison de ladite mesure de taille (108) avec un point de consigne prédéfini (210) représentant une quantité souhaitée de trames mises en mémoire tampon, de sorte que ladite mesure de taille (108) soit commandée audit point de consigne prédéfini (210),
- dans lequel ladite unité de commande (104) comprend un dispositif de commande (208) configuré pour calculer une adaptation dudit flux de trames (106), représentant le degré auquel le flux de trames (106) doit être adapté,
dans lequel ledit dispositif de commande (208) est un dispositif de commande (208) proportionnel configuré pour calculer ladite adaptation dudit flux de trames (106), ladite adaptation étant proportionnelle à la différence entre ladite mesure de taille (108) et ledit point de consigne prédéfini (210),
ou
dans lequel ledit dispositif de commande (208) est un dispositif de commande (208) proportionnel-dérivé configuré pour calculer ladite adaptation dudit flux de trames (106), ladite adaptation comprenant :
- une adaptation proportionnelle à la différence entre ladite mesure de taille (108) et ledit point de consigne prédéfini (210), et
- une adaptation basée sur la vitesse à laquelle ladite mesure de taille change (108) ;
- une unité de transmission (103) configurée pour transmettre des données dudit tampon de données (102) via une connexion réseau (107) à un client vidéo (200) suivant la largeur de bande disponible effective dans ladite connexion réseau (107).

2. Appareil (100) selon la revendication 1,
dans lequel ladite unité de transmission (103) comprend une prise réseau avec une capacité de tampon de transmission au moins 10 fois inférieure à une taille moyenne dudit fichier image (214).

3. Appareil (100) selon l'une des revendications précédentes,
dans lequel ladite unité de commande (104) est configurée pour adapter ledit flux de trames (106) en adaptant ladite fréquence de trames et/ou en adaptant ledit niveau de qualité de codage.

4. Appareil (100) selon la revendication 1 ou la revendication 2,
dans lequel ladite unité de commande (104) est configurée pour adapter ledit flux de trames (106) en adaptant l'échelle de ladite trame.

5. Appareil selon la revendication 1 ou la revendication 2,
dans lequel ladite unité de commande (104) est configurée pour recevoir une stratégie de commande définie par l'utilisateur, où ladite stratégie de commande définit les un ou plusieurs paramètres à utiliser pour adapter ledit flux de trames (106), et lesdits un ou plusieurs paramètres doivent être sélectionnés dans le groupe de : une fréquence de trames, un niveau de qualité de codage, ou une échelle.

6. Appareil (100) selon l'une des revendications précédentes,
dans lequel ladite unité de commande (104) est configurée pour augmenter ledit flux de trames (106) si ladite mesure de taille (108) est inférieure audit point de consigne prédéfini (210), en augmentant ladite fréquence de trames si ladite fréquence de trames est en dessous d'une valeur maximale prédéfinie ou autrement en augmentant ledit niveau de qualité de codage, et
ladite unité de commande (104) est configurée pour diminuer ledit flux de trames (106) si ladite mesure de taille (108) dépasse ledit point de consigne prédéfini (210), en diminuant ladite fréquence de trames si ladite fréquence de trames est au-dessus d'une valeur minimale prédéfinie ou autrement en diminuant ledit niveau de qualité de codage.

7. Appareil (100) selon l'une des revendications précédentes,
dans lequel ladite mesure de taille (108) dudit tampon de données (102) est une quantité de trames stockées temporairement actuellement présentes dans ledit tampon de données (102).

8. Appareil (100) selon l'une des revendications précédentes,
dans lequel ledit générateur de trames (101) utilise une compression JPEG pour coder ladite trame en ledit fichier image (214).

9. Procédé comprenant :
- la réception d'une vidéo (105) ;
- la transformation de ladite vidéo (105) en un flux de trames (106), comprenant :
o la génération d'un flux de trames séquentielles à une fréquence de trames ;
o le codage de chaque trame individuellement dans un fichier image (214) à un niveau de qualité de codage, compressant ainsi chaque trame indépendamment de toute autre frame ;
- la réception dudit flux de trames (106) par un tampon de données (102) ;
- le stockage temporaire de données reçues dans ledit tampon de données (102) ;
- l'obtention d'une mesure de taille (108) dudit tampon de données (102) ;
- l'adaptation dudit flux de trames (106) sur la base d'une comparaison de ladite mesure de taille (108) avec un point de consigne prédéfini (210) représentant une quantité souhaitée de trames mises en mémoire tampon, de sorte que ladite mesure de taille (108) soit commandée audit point de consigne prédéfini (210),
dans lequel une adaptation dudit flux de trames (106) est calculée par un dispositif de commande (208), ladite adaptation représentant le degré auquel le flux de trames (106) doit être adapté, et
dans lequel ledit dispositif de commande (208) est un dispositif de commande (208) proportionnel configuré pour calculer ladite adaptation dudit flux de trames (106), ladite adaptation étant proportionnelle à la différence entre ladite mesure de taille (108) et ledit point de consigne prédéfini (210),
ou
dans lequel ledit dispositif de commande (208) est un dispositif de commande (208) proportionnel-dérivé configuré pour calculer ladite adaptation dudit flux de trames (106), ladite adaptation comprenant :
- une adaptation proportionnelle à la différence entre ladite mesure de taille (108) et ledit point de consigne prédéfini (210), et
- une adaptation basée sur la vitesse à laquelle ladite mesure de taille change (108) ;
- la transmission de données dudit tampon de données (102) via une connexion réseau (107) à un client vidéo (200) suivant la largeur de bande disponible effective dans ladite connexion réseau (107).

10. Produit de programme informatique comprenant des instructions exécutables par ordinateur pour amener un dispositif (100) à réaliser au moins ce qui suit :
- la réception d'une vidéo (105) ;
- la transformation de ladite vidéo (105) en un flux de trames (106), comprenant :
o la génération d'un flux de trames séquentielles à une fréquence de trames ;
o le codage de chaque trame individuellement dans un fichier image (214) à un niveau de qualité de codage, compressant ainsi chaque trame indépendamment de toute autre frame ;
- la réception dudit flux de trames (106) par un tampon de données (102) ;
- le stockage temporaire de données reçues dans ledit tampon de données (102) ;
- l'obtention d'une mesure de taille (108) dudit tampon de données (102) ;
- l'adaptation dudit flux de trames (106) sur la base d'une comparaison de ladite mesure de taille (108) avec un point de consigne prédéfini (210) représentant une quantité souhaitée de trames mises en mémoire tampon, de sorte que ladite mesure de taille (108) soit commandée audit point de consigne prédéfini (210)
dans lequel une adaptation dudit flux de trames (106) est calculée par un dispositif de commande (208), ladite adaptation représentant le degré auquel le flux de trames (106) doit être adapté, et
dans lequel ledit dispositif de commande (208) est un dispositif de commande (208) proportionnel configuré pour calculer ladite adaptation dudit flux de trames (106), ladite adaptation étant proportionnelle à la différence entre ladite mesure de taille (108) et ledit point de consigne prédéfini (210),
ou
dans lequel ledit dispositif de commande (208) est un dispositif de commande (208) proportionnel-dérivé configuré pour calculer ladite adaptation dudit flux de trames (106), ladite adaptation comprenant :
- une adaptation proportionnelle à la différence entre ladite mesure de taille (108) et ledit point de consigne prédéfini (210), et
- une adaptation basée sur la vitesse à laquelle ladite mesure de taille change (108) ;
- la transmission de données dudit tampon de données (102) via une connexion réseau (107) à un client vidéo (200) suivant la largeur de bande disponible effective dans ladite connexion réseau (107).
